# EUROPEAN PATENT SPECIFICATION

(11) **EP 2 436 644 B1**
(45) Date of publication and mention of the grant of the patent: **31.10.2018**
(21) Application number: 10780522.8
(22) Date of filing: 24.05.2010
(51) Int. Cl.: C01B 3/08, B22F 1/00, B22F 1/02, B22F 9/12, B82Y 30/00

(54) **HYDROGEN GENERATING MATERIAL, METHOD FOR PRODUCING SAME AND METHOD FOR PRODUCING HYDROGEN**
MATERIAL ZUR WASSERSTOFFERZEUGUNG, HERSTELLUNGSVERFAHREN DAFÜR UND VERFAHREN ZUR HERSTELLUNG VON WASSERSTOFF
MATIÈRE GÉNÉRANT DE L'HYDROGÈNE, SON PROCÉDÉ DE FABRICATION ET PROCÉDÉ DE FABRICATION D'HYDROGÈNE

(30) Priority: 25.05.2009 JP 2009125016; 01.04.2010 JP 2010084753
(43) Date of publication of application: 04.04.2012
(73) Proprietor: National Institute for Materials Science, Tsukuba-shi, Ibaraki 305-0047 (JP)
(72) Inventor: UDA Masahiro, Tokyo 146-0093 (JP); OKUYAMA Hideo, Tsukuba-shi Ibaraki 305-0047 (JP); SAKKA Yoshio, Tsukuba-shi Ibaraki 305-0047 (JP)
(74) Representative: Dehns
(86) International application number: PCT/JP2010/058770
(87) International publication number: WO 2010/137567

(56) References cited:
- WO-A1-01/68517
- WO-A1-2006/011462
- JP-A- 2003 221 202
- JP-A- 2003 221 202
- JP-A- 2006 152 376
- JP-A- 2007 153 667
- JP-A- 2010 006 673
- JP-T- 11 503 489
- KOOI B ET AL: "Gas-phase synthesis of magnesium nanoparticles: A high-resolution transmission electron microscopy study", APPLIED PHYSICS LETTERS, AIP, AMERICAN INSTITUTE OF PHYSICS, MELVILLE, NY, US, vol. 89, no. 16, 19 October 2006 (2006-10-19), pages 161914-161914, XP012086407, ISSN: 0003-6951, DOI: 10.1063/1.2358860
- HIDEO OKUYAMA ET AL.: 'Arc Plasma-ho ni yoru Mg Nano Ryushi no Shin Seizoho' ABSTRACTS OF MEETING OF JAPAN SOCIETY OF POWDER AND POWDER METALLURGY HEISEI 21 NENDO SHUKI TAIKAI 27 October 2009, page 41, XP008149255
- MASAHIRO UDA ET AL.: 'Mg Nano Ryushi to Mizu tono Hanno ni yoru Suiso Hassei' ABSTRACTS OF MEETING OF JAPAN SOCIETY OF POWDER AND POWDER METALLURGY HEISEI 21 NENDO SHUKI TAIKAI 27 October 2009, page 42, XP008149257

## Description

### [Technical Field]

The present invention relates to a hydrogen generating material which reacts with water to generate hydrogen, and to its production method, as well as to a method for producing hydrogen by using the hydrogen generating material.

### [Background Art]

Heretofore hydrogen generating materials have been actively studied and, for example, in Patent Reference 1, shown are particles produced from a material of Al, Mg and an alloy thereof according to an atomizing method, and a method of generating hydrogen where a mixture (Al, Mg metal and oxide) prepared by adding to the particles a heat generating material (Al₂O₃, CaO) in a ratio of at most 30% by mass reacts with water and generates hydrogen; however, the method is accompanied by heat generation in which, in addition, the hydrogen generating speed is not sufficient.

Patent Reference 2 describes a method to be the origin of Patent Reference 1, and says that the above-mentioned material is a composite material comprising Al and an Al alloy and a metal oxide that is in interfacial contact therewith.

The method for producing the composite material in Patent Reference 2 comprises mixing a commercially-available Al powder (particle size: 3 µm) and a commercially available Al(OH)₃ (in a given ratio) followed by sintering at 600°C under pressure (120 MPa).

Patent Reference 3 shows a method where an Mg-Li alloy is brought into contact with an ammonium salt solution to generate hydrogen, but does not showcase an example where the alloy is reacted with pure water to generate hydrogen.

Patent Reference 4 is a method where a product produced by mixing metal Mg particles (particle size: 10 µm) and oxide particles (TiO₂, SiO₂, Al₂O₃, particle size: 1 to 10 µm) followed by imparting mechanical energy thereto is used, and reacted with water to generate hydrogen, in which mixed particles are used but not a metal Mg alloy. At present, Mg particles of not larger than 10 µm in size are not commercially available. It is said that the reason is because sieving an Mg powder produced by grinding would be accompanied by a risk of ignition, explosion, etc.

In Patent Reference 5, employed is a hydrogen gas generating method where a micron-size (5 to 500 µm) powder of Mg hydride (MgH₂) is reacted with water. However, production of MgH₂ requires an operation in a hydrogen gas at a high temperature (350 to 500°C) and under a high pressure (10 to 60 kPa pressure). In addition, in order to facilitate the hydrogen generation through the reaction with water, a material that is referred to as a heat generating material (Al, CaO, C, etc.) must be added in an amount of 20% or so, and therefore, there are problems in that the amount of the Mg hydride reduces and the hydrogen generation efficiency that is the amount of hydrogen generation per the unit weight of the hydrogen generating composition therefore lowers.

Patent Reference 6 says that MgH₂ given intensive mechanical energy to be in a nanocrystalline state is reacted with water to generate hydrogen, in which, however, the material is not in the form of nanoparticles. Production of such a material requires high energy.

Patent Reference 7 says that a nanomaterial is produced through treatment such as ball milling or the like, which, however, is substantially within the same category as that of Patent Reference 6.

Non-Patent Reference 1 describes the production of magnesium nanoparticles with a particle size above 10 nm which are oxidized to form a MgO shell about 3 nm thick and deposited on an amorphous silicon-nitride membrane.

Hydrogen is specifically noted as clean energy; however, under the above-mentioned existing technology, the production of hydrogen generating material requires complicated operation and high energy impartation, except a hydrogen absorbing alloy or storage in a high-pressure tank or the like, there is not known a method of readily obtaining hydrogen.

### [Citation List]

### [Patent References]

[Patent Reference 1] Japanese Patent 4104016
[Patent Reference 2] Japanese Patent 4054877
[Patent Reference 3] JP-A 2004-269310
[Patent Reference 4] JP-A 2008-156148
[Patent Reference 5] JP-A 2008-37683
[Patent Reference 6] JP-T 2003-527281
[Patent Reference 7] WO2006/011620
[Non-Patent Reference 1] Kooi et al. Appl. Phys. Lett. 89, 161914 (2006)

### [Disclosure of the Invention]

### [Problems that the Invention is to Solve]

The present invention has been made in consideration of the situation as above, and its object is to provide a hydrogen generating material that generates hydrogen stably even in air.

### [Means for Solving the Problems]

According to one embodiment of the invention, there is provided a hydrogen generating material comprising a dispersion of Mg nanoparticles in a liquid, wherein said Mg nanoparticles have a surface which been slowly oxidized in an atmosphere having a lower oxygen concentration than the oxygen concentration in air, wherein the liquid is an anhydrous alcohol, said Mg nanoparticles being capable of reacting with water to generate hydrogen.

In this case, the specific surface area of the Mg nanoparticles may be less than 70 m²/g but more than 3 m²/g.

The hydrogen generating material may contain a powder of a metal of which the standard electrode potential is larger in the positive direction than that of Mg. The metal of the type may be at least one metal selected from Ag, Cu and Fe.

According to another embodiment of the invention, there is provided a method for producing the hydrogen generating material of the invention which comprises at least the following steps (a) to (c):
(a) a step of arc-melting an Mg metal ingot in an atmosphere of hydrogen, nitrogen, Ar or a mixed gas thereof to give Mg nanoparticles;
(b) a step of slowly oxidizing the surface of the Mg nanoparticles in an atmosphere having a lower oxygen concentration than the oxygen concentration in air;
(c) a step of dispersing the Mg nanoparticles in an anhydrous alcohol.

According to still another embodiment of the invention, there is provided a method for producing hydrogen by reacting the above-mentioned hydrogen generating material with water to generate hydrogen. In this case, the hydrogen generating material may be put into water for the reaction, or water may be dropwise added to the hydrogen generating material for the reaction.

A hydrogen producing apparatus which comprises a hydrogen generating tank to store water therein, and a generating material storing tank from which the hydrogen generating material is put into the hydrogen generating tank.

The hydrogen producing apparatus may comprise a hydrogen generating tank to house therein a water-pervious generating bed comprising the above-mentioned hydrogen generating material, a water supply means, and, as arranged in the hydrogen generating tank, a dropping mouth via which water from the water supply means is dropwise given to the generating bed.

A dropwise adding amount regulating unit may be provided between the water supply means and the dropping mouth.

### [Advantage of the Invention]

Employing the above-mentioned specific constitution, the present invention provides Mg nanoparticles that are not only stable in air but also can realize heretofore unknown, high-speed hydrogen generation.

As a result, the invention can realize production of hydrogen and in-site use thereof not using a hydrogen absorbing alloy or a high-pressure tank.

### [Brief Description of the Drawings]

[Fig. 1] Fig. 1 is an outline view of an Mg nanoparticles producing apparatus used for obtaining the hydrogen generating material of the invention.
[Fig. 2] Fig. 2 shows scanning electron micrographs of Mg powders 1, 2, 3.
[Fig. 3] Fig. 3 shows powdery X-ray diffraction patterns of Mg powders 1, 2, 3.
[Fig. 4] Fig. 4 is a view for explaining measurement of the amount of hydrogen generation through gas chromatography.
[Fig. 5] Fig. 5 is a view for explaining measurement of the amount of hydrogen generation through gas collection over water.
[Fig. 6] Fig. 6 is a graph showing the change (long-time change) of the amount of hydrogen generation from Mg powders 1, 2, 3.
[Fig. 7] Fig. 7 is a graph showing the change (short-time change) of the amount of hydrogen generation from Mg powders 1, 2, 3.
[Fig. 8] Fig. 8 is a scanning electron micrograph of reaction product of Mg powder 1 reacted with water.
[Fig. 9] Fig. 9 is a X-ray diffraction pattern of Mg powder 1 reacted with water.
[Fig. 10] Fig. 10 is a view showing the relationship between the temperature of water and the amount of hydrogen generation over time(s).
[Fig. 11] Fig. 11 is a outline view of a reactor for hydrogen generation.
[Fig. 12] Fig. 12 is a view for comparing the amount of hydrogen generation between a case where an Mg powder was put into a large quantity of water (gas chromatography) and a case where water was dropwise applied to an Mg powder (pressure measurement).
[Fig. 13] Fig. 13 is a view showing the comparison of the amount of hydrogen generation from various types of Mg powder pellets.
[Fig. 14] Fig. 14 is a series of photographs showing the time-dependent change of hydrogen generation.
[Fig. 15] Fig. 15 is an outline view of an apparatus for carrying out a method of hydrogen generation.
[Fig. 16] Fig. 16 is an outline view of an apparatus for carrying out another method of hydrogen generation.

### [Mode for Carrying out the Invention]

The inventors of the present application have heretofore made studies of formation of nanoparticles of metals, alloys and ceramics with arc hydrogen, nitrogen plasma (Journal of Japan Institute of Metals, Vol. 53, No. 10, 1062-1067). One of the studies is a countermeasure against the problem in that, when a metal is formed into nanoparticles, they are extremely active, and when they are taken out in air, they react with air and burn. For taking out such active metal nanoparticles in air, when a thin oxide film is formed on the surface thereof, then they do not burn and can be taken out in air safely. The inventors have confirmed that, as the means, it is good to slowly oxidize active metal nanoparticles in an atmosphere having a low oxygen concentration (slow oxidation) (Journal of Japan Institute of Metals, Vol. 60, No. 3, 318-323).

On the other hand, the inventors have confirmed that, when active metal nanoparticles are reacted with water in place of slow oxidation treatment thereof, almost all the metal nanoparticles react with water to generate hydrogen. In this method, presence of only metal particles and water enables in-site hydrogen production, and therefore it is considered that hydrogen could be produced extremely in a simplified manner.

However, as a result of the present inventors' investigations made thereafter, it has been found that, in fact, the method indispensably requires operation in a globe box and therefore the method is problematic in that its production control system is complicated. Accordingly, the inventors of the present application have further investigated and checked for the presence or absence of reaction of various, slowly-oxidized metal nanoparticles with water in air, and have found out a phenomenon that only Mg nanoparticles among them vigorously react with water to generate hydrogen.

The present invention is based on this finding.

Mg metal nanoparticles that are the constitutive ingredient of the hydrogen generating material of the invention can be produced in various methods, and for example, they are produced according to the following methods.
1) A method of arc-melting an Mg metal ingot in hydrogen or in an Ar atmosphere containing hydrogen.
2) A method of arc-melting an Mg metal ingot in nitrogen or in an Ar atmosphere containing nitrogen.
3) A method of arc-melting an Mg metal ingot in an Ar atmosphere.

Of the above-mentioned three methods, 1) and 2) are employed this time in Examples. Needless-to-say, the method 3) is also usable.

1) is a method based on the technology that the present inventors developed around 1975 (Japanese Patents 1146170, 1476623).

The present inventors have applied the above-mentioned methods 1) and 2) to production of nanoparticles of various materials (metals, alloys, ceramics).

In particular, in the method 1), hydrogen is used, but regarding the role thereof, hydrogen is effective for rapid increase in the evaporation speed of the material, or that is, for rapid increase in the nanoparticles formation speed of the intended material. Further, hydrogen is not consumed but has a catalytic effect for nanoparticles formation.

In the method 2), nitrogen is used. Regarding the role thereof, nitrogen is effective, like hydrogen, for rapid increase in the evaporation speed of the material, or that is, for rapid increase in the nanoparticles formation speed of the intended material. Further, nitrogen is not consumed but has a catalytic effect for nanoparticles formation. However, at present, there is known no report at all (including patent references, non-patent references, etc.) regarding the application of the method to production of Mg nanoparticles.

In this connection, at present, Mg nanoparticles are not available on the market. It is said that the reason is because sieving an Mg powder produced by grinding would be accompanied by a risk of ignition, explosion, etc.

The Mg nanoparticles produced in the above-mentioned methods 1) and 2) are extremely active, and when the Mg nanoparticles immediately at their production are taken out in air, they react with air and burn.

In the present invention, the reaction of Mg nanoparticles and water is attained in air, and therefore the Mg nanoparticle surface must be stabilized.

As the stabilization means, slow oxidation treatment is employed in the invention. The slow oxidation treatment employed in the invention is a treatment of slowly oxidizing surface-active metal nanoparticles in a low-concentration oxygen atmosphere.

In case where the surface of metal nanoparticles is clean, not coated with an oxide film, and when a powder of such metal nanoparticles is brought into contact with air, then the nanoparticles ignite and burn to give a metal oxide. This is because the nanoparticles are kept in contact with high-concentration oxygen in air, therefore causing rapid oxidization and heat generation to promote oxidation, whereby the nanoparticles ignite and burn. For preventing the phenomenon, slow oxidation treatment is employed, or that is, a powder of metal nanoparticles is put in an atmosphere having a lower oxygen concentration than the oxygen concentration in air whereby the nanoparticles are slowly oxidized so that the surface layer of the nanoparticles (in a case of 100-nm particles, the surface layer of a few nm) is oxidized and the nanoparticles are thereby stabilized. The metal nanoparticles stabilized in that manner do not burn when taken out in air.

In the invention, the surface of Mg nanoparticles is slowly oxidized, for example, by putting the nanoparticles in a 1% O₂-Ar atmosphere for a few hours or longer to thereby form a thin oxide film on the surface thereof, and the Mg nanoparticles are thereby stabilized.

The slow oxidation treatment itself is a commonly-known technique, and except the above-mentioned method, other various general-purpose means may be employed here.

The hydrogen generating material of the invention is produced according to the method as defined in claim 5.

The hydrogen generating material of the invention is characterized in that it contains Mg nanoparticles having a slowly-oxidized surface. In case where the material contains a metal, of which the working standard electrode potential is larger in the positive direction than that of Mg, for example, Ag, Cu, Fe or the like, its hydrogen generation may be promoted, and therefore, preferably, the material contains the metal of the type.

For producing hydrogen by the use of the hydrogen generating material of the invention, the hydrogen generating material may be reacted with water to generate hydrogen. In this case, the hydrogen generating material may be put into water for the reaction, or water may be dropwise applied to the hydrogen generating material for the reaction.

As shown in Examples, a method of putting the hydrogen generating material (Mg powder) into water to generate hydrogen from water is effective for steady generation of hydrogen.

There are various types of apparatus which are suitable for use in the method for producing hydrogen according to the invention. For example, "a hydrogen producing apparatus which comprises a hydrogen generating tank to store water therein, and a hydrogen generating material storing tank from which the hydrogen generating material is put into the hydrogen generating tank", and "a hydrogen producing apparatus which comprises a hydrogen generating tank to house therein a water-pervious hydrogen generating bed comprising the above-mentioned hydrogen generating material,
a water supply means, and, as arranged in the hydrogen generating tank, a dropping mouth via which water from the water supply means is dropwise given to the generating bed" are preferably used here.

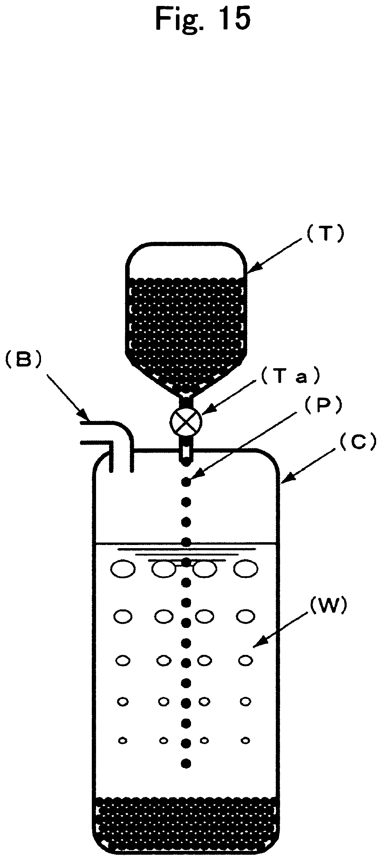

Concretely, the apparatus shown in Fig. 15 is suitable for use herein. In the apparatus of Fig. 15, water (W) is stored in the hydrogen generating tank of a closed container (C) provided with a hydrogen discharge duct (B) in a part thereof, and a storing tank (T) for particles (P) having a dropping mouth opened therein is provided. By the control valve (Ta) of the storing tank (T), the amount of water (W) to be applied to the particles (P) is controlled so that the amount of hydrogen discharge via the discharge duct (B) is thereby controlled. This configuration is effective for continuous hydrogen generation.

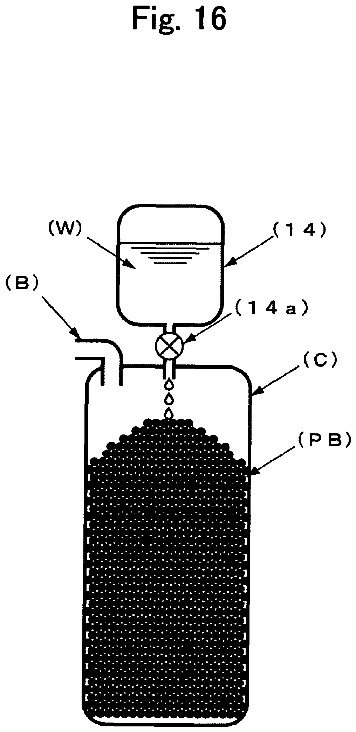

On the other hand, as shown in Fig. 16, a generating bed (PB) is packed with a hydrogen generating material so that the bed could be pervious to water, and put in a hydrogen generating tank, and by controlling the control valve (14a) of the water tank (14), a suitable amount of water is dropwise given onto the generating bed (PB), whereby the water (W) could be rapidly treated with Mg particles of which the amount is overwhelmingly larger than the amount thereof. This configuration is effective for controlling the amount of hydrogen generation in accordance with the usage thereof.

As a result, in case where a necessary amount of hydrogen is suitably generated, the amount of hydrogen to be generated can be increased or decreased within a short period of time by controlling the amount of water supply.

### [Examples]

### (Example 1 - Comparative)

### (Mg Powder 1)

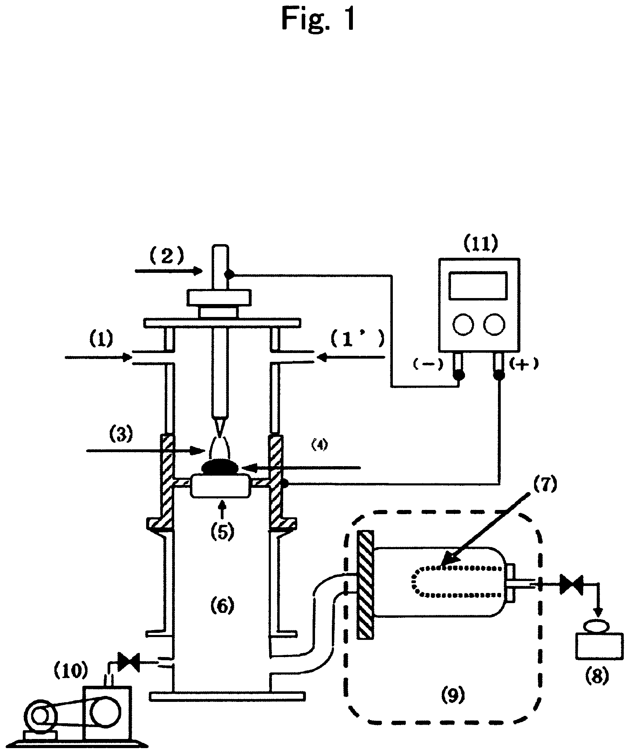

The Mg nanoparticles used in this Example were produced in the nanoparticles producing apparatus shown in Fig. 1.

The process of producing the Mg powder is as follows.

About 20 grams of an Mg ingot (4) (purity 99.9%) was put into the nanoparticles producing apparatus (a type of direct arc melting furnace), and the apparatus was degassed with the rotary pump (10), then a mixed gas of hydrogen and argon (10% H₂-Ar) was introduced thereinto to have a total pressure of 90 KPa or so. Next, the Mg ingot (4) was melted with direct arc (150 A, 40 V or so, positive polarity). While melted, Mg evaporated and concentrated to give Mg nanoparticles. Along with the mixed gas stream running therearound, the formed Mg nanoparticles were collected by the filter collector (7) set in the globe box (9).

When the arc discharging was stopped, the formation of Mg nanoparticles was also stopped at the same time.

The reaction between water and Mg nano-particles prepared by the method described above is carried out in air. It is necessary to provide a thin oxide film on the surface of Mg nano particles in order to prevent ignition by the reaction of Mg particles and air (passivation treatment). The passivation treatment consisted of keeping particles in an atmosphere of 1%O₂ in Ar for few hours at room temperature.

The stabilized Mg powder 1 was taken out in air and used for reaction with water.

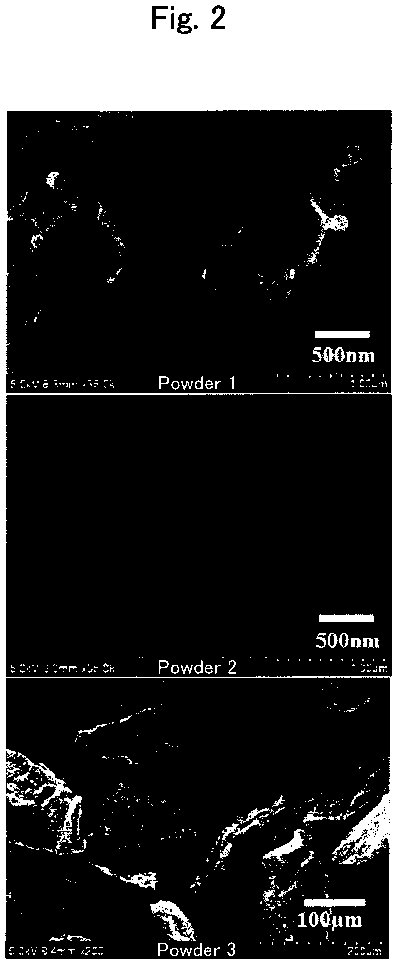

The SEM photograph of the Mg nanoparticles obtained in the method is shown in the upper stage of Fig. 2, "Powder 1". From this photograph, it is known that the particle size is from 20 nm to 1000 nm (1 µm).

The measured value of the specific surface area is 13 m²/g, and the mean particle size derived from it is 265 nm.

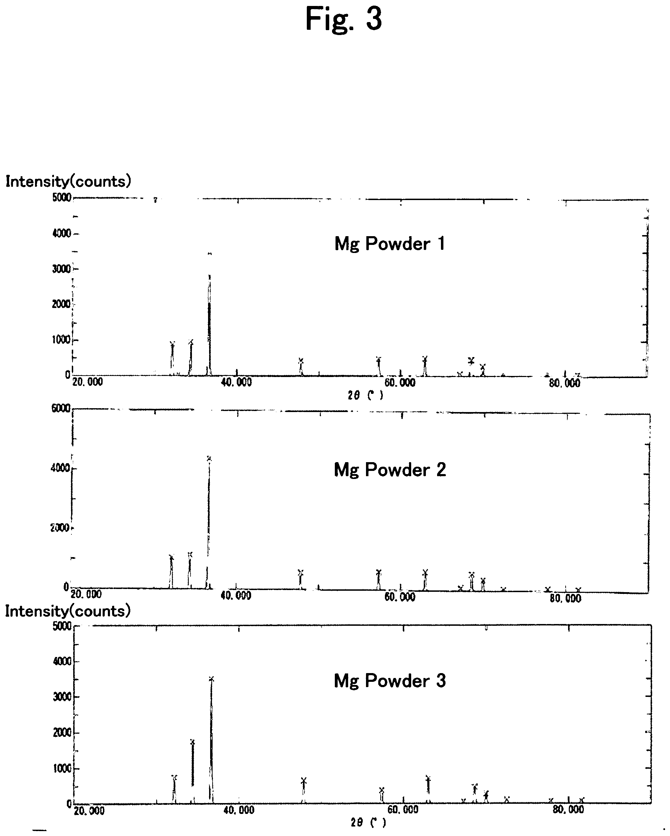

The measured XRD pattern is shown in the upper stage of Fig. 3, "Mg Powder 1". As shown therein, no hydride was detected in the obtained Mg nanoparticles.

### (Mg Powder 2)

Mg powder 2 was produced also using the nanoparticles producing apparatus shown in Fig. 1.

About 20 grams of an Mg ingot (4) was put into the nanoparticles producing apparatus (a type of direct arc melting furnace), and the apparatus was degassed with the rotary pump (10), then a mixed gas of nitrogen and argon (20% N₂-Ar) was introduced thereinto to have a total pressure of 90 KPa or so. Next, the Mg ingot (4) was melted with direct arc (150 A, 40 V or so, positive polarity). While melted, Mg evaporated and concentrated to give Mg nanoparticles. Along with the mixed gas stream running therearound, the formed Mg nanoparticles reached the globe box (9), and collected by the filter collector (7) set inside the box.

When the arc discharging was stopped, the formation of Mg nanoparticles was also stopped at the same time.

The reaction between water and Mg nano-particles prepared by the method described above is carried out in air. It is necessary to provide a thin oxide film on the surface of Mg nano particles in order to prevent ignition by the reaction of Mg particles and air (passivation treatment). The passivation treatment consisted of keeping particles in an atmosphere of 1%O₂ in Ar for few hours at room temperature.

The stabilized Mg powder 2 was taken out in air and used for reaction with water.

The SEM photograph of the Mg nanoparticles obtained in the method is shown in the middle stage of Fig. 2, "Powder 2". From this, it is known that the particle size is from 20 nm to 1000 nm.

The measured value of the specific surface area is 6 m²/g, and the mean particle size derived from it is 570 nm.

The measured XRD pattern is shown in the middle stage of Fig. 3, "Mg Powder 2". As shown therein, no nitride was detected in the obtained Mg nanoparticles.

### (Mg Powder 3)

For comparison with the Mg powder 1 and the Mg powder 2 used in the invention, a commercially-available Mg powder 3 (produced by Kojundo Chemical Laboratory; particle size, 180 µm pass) was used.

The Mg powder 3 was stored in oil and taken out, then washed with ethanol and dried, and used here.

The measured value of the specific surface area is 0.96 m²/g, and the mean particle size derived from it is 18 µm. The SEM photograph of the particles is shown in the lower stage of Fig. 2, "Powder 3"; and the measured XRD pattern is shown in the lower stage of Fig. 3, "Mg Powder 3".

The above contents are collectively shown in Table 1.

**[Table 1]**

| Production Condition for Mg Powder, Particle Size Surface Condition | | | | | |
|---|---|---|---|---|---|
| Mg Powder No. | | | 1 | 2 | 3 |
| Starting Material | | | Mg | same as on the left | Commercial Mg |
| Thermal Plasma | atmosphere gas | | 10%H₂-Ar | 20%N₂-Ar | |
| | pressure | KPa | 90 | same as on the left | |
| | direct arc (positive polarity) | current (A) | 150 | same as on the left | |
| | | voltage (V) | 40 | same as on the left | |
| Mg Particles | slow oxidation treatment | atmosphere | 1%O₂-Ar | 1%O₂-Ar | |
| | | treatment time | 10 hr | same as on the left | |
| | particle size (nm) | minimum | 20 | 20 | - |
| | | maximum | 10³ | 10³ | - |
| | | average | 265 | 570 | 18 x 10³ |
| | specific surface area | m²/g | 13 | 6 | 0.19 |
| | surface condition | | MgO film | same as on the left | same as on the left |

### (Example 2 - Comparative)

In the following, the Mg powder was reacted with water to generate hydrogen. For measuring the amount of hydrogen generated in the process, the following method was employed.

### A. A method of determining the amount from the hydrogen gas concentration change in a constant volume (gas chromatography).

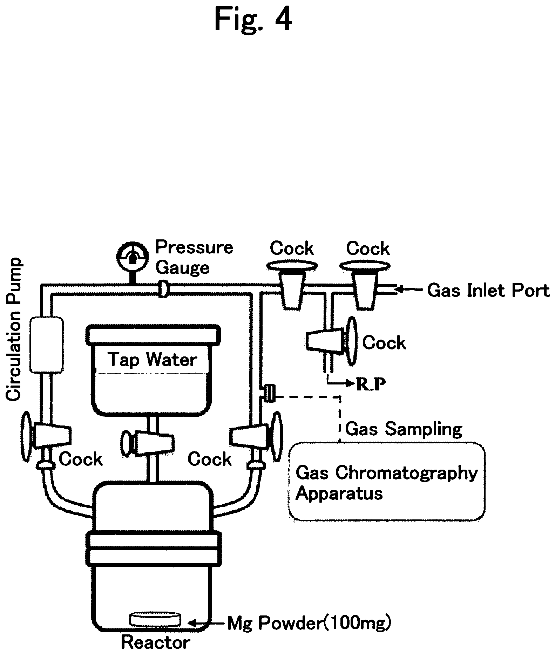

The hydrogen gas generated when the Mg powder had been put into a sufficient amount of water (25°C) was collected at regular time intervals in a gas chromatography apparatus, and the hydrogen gas concentration change was determined. An apparatus of gas chromatography connected with a reactor, as shown in Fig. 4, was constructed. Inside the reactor, an Mg powder (100 mg) was previously set, and about 50 ml of water was put thereinto from the top of the reactor, in which hydrogen gas was thereby generated. In this case, the stoichiometric amount of water necessary for hydrogen generation relative to 100 mg of Mg is 0.15 ml, and therefore, the amount of water added to the reactor was 50 ml, much larger than the stoichiometric amount thereof.

### B. A method of measuring the amount of generated hydrogen gas according to a method of gas collection over water.

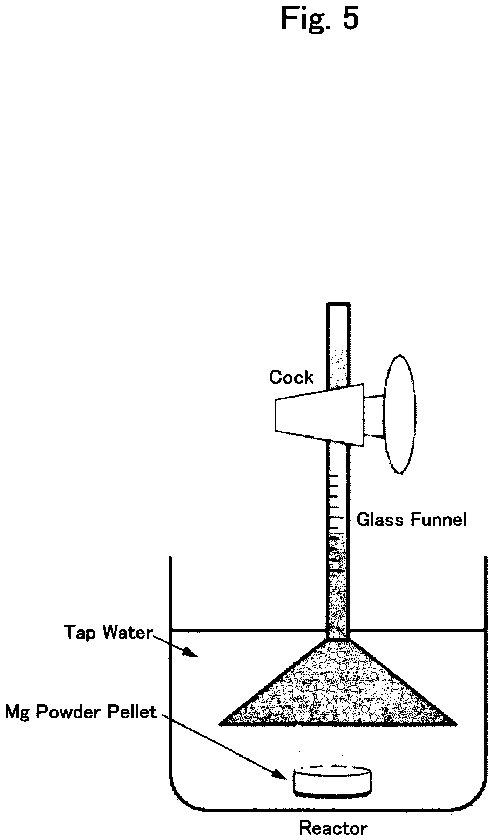

When Mg (100 mg) powder 1) or 2) is put into a sufficient amount of water (100 ml), Mg reacts with water in tens seconds after the addition and generates hydrogen, and therefore, for the measurement of the amount of generated hydrogen in a short period of time (from a few seconds to 10 minutes), the method of gas collection over water was employed. Fig. 5 shows an outline of the method of gas collection over water.

Specifically, in case where an Mg powder was put into a sufficient amount of water, the amount of hydrogen generation within a short period of time after the addition was measured in the method of gas collection over water, and in a longer region after that, the amount was measured through gas chromatography. In the following, it is troublesome to describe the two-stage measurement in detail, and therefore, in expressing the measurement method, gas chromatography was shown representatively.

The particle size of the Mg powder 3) was large, and therefore, within a short period of time (from a few seconds to 10 minutes), hydrogen generation was not confirmed.

### C. Method of pressure measurement.

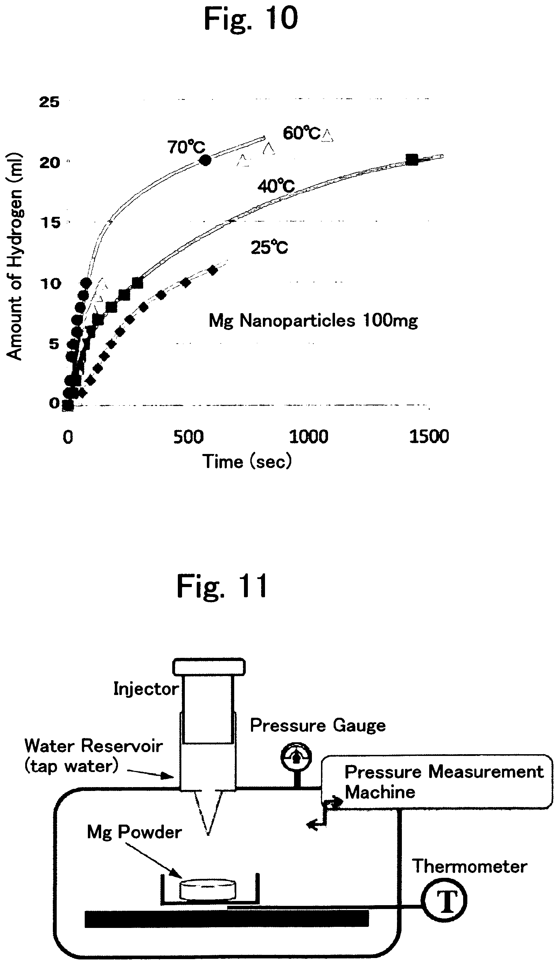

For the case where water is dropwise applied to an Mg powder for hydrogen generation, a method of pressure measurement of determining the amount of hydrogen generation from the pressure increase inside a closed container, as shown in Fig. 11, was employed.

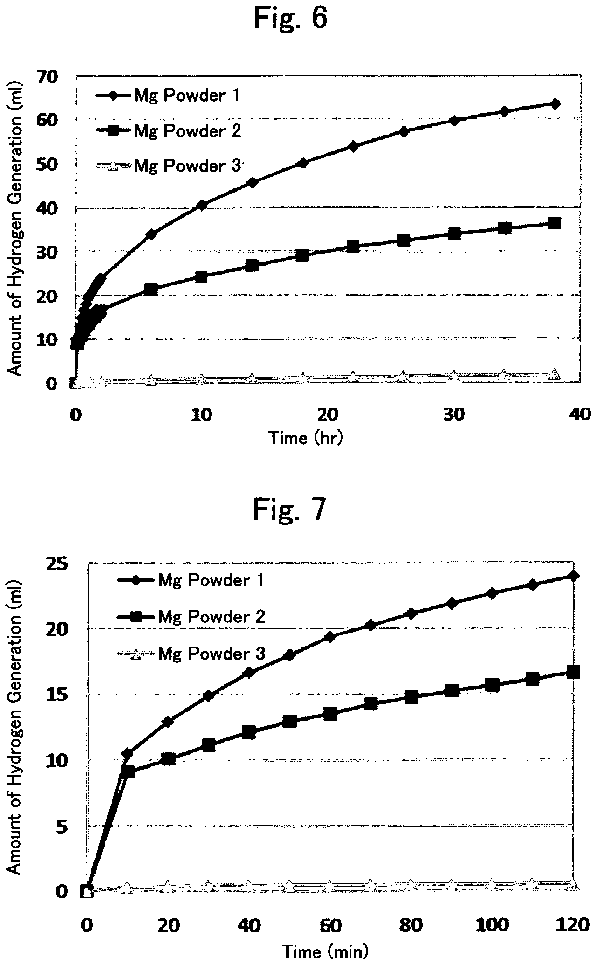

The relationship between the amount of hydrogen generation from the Mg powder 1, Mg powder 2 and Mg powder 3 (100 mg each) and time are shown in Fig. 6 and Fig. 7. Fig. 6 shows the hydrogen generation change for a long period of time (30 hours and more); and Fig. 7 shows the hydrogen generation change within a short period of time in the initial stage of generation. Table 2 shows the relationship between the amount of hydrogen generation and time.

From Fig. 6 and Fig. 7, it is known that the amount of hydrogen generation from the Mg powder 1, 2 is 30 times or more the amount from the commercial Mg powder 3. "The amount of hydrogen generation" as referred to in this application means the cumulative amount from the start of hydrogen generation, unless otherwise specifically indicated.

**[Table 2]**

| Relationship between amount of hydrogen from the reaction of water and Mg powders (100 mg used) | | | |
|---|---|---|---|
| Time | Mg Powder 1 | Mg Powder 2 | Mg Powder 3 |
| min | ml | ml | ml |
| 0 | 0.0 | 0.0 | 0.0 |
| 10 | 10.5 | 9.1 | 0.3 |
| 20 | 12.9 | 10.1 | 0.4 |
| 30 | 14.9 | 11.1 | 0.4 |
| 40 | 16.6 | 12.1 | 0.5 |
| 50 | 18.0 | 13.0 | 0.5 |
| 60 | 19.4 | 13.5 | 0.5 |
| 70 | 20.2 | 14.2 | 0.5 |
| 80 | 21.1 | 14.7 | 0.5 |
| 90 | 21.9 | 15.2 | 0.5 |
| 100 | 22.7 | 15.7 | 0.5 |
| 110 | 23.3 | 16.1 | 0.5 |
| 120 | 24.0 | 16.6 | 0.5 |
| 360 | 34.0 | 21.5 | 0.7 |
| 600 | 40.5 | 24.3 | 0.9 |
| 840 | 45.6 | 26.8 | 1.1 |
| 1080 | 50.1 | 29.0 | 1.2 |
| 1320 | 53.9 | 31.0 | 1.4 |
| 1560 | 57.3 | 32.5 | 1.5 |
| 1800 | 59.7 | 33.9 | 1.7 |
| 2040 | 61.9 | 35.2 | 1.8 |
| 2280 | 63.5 | 36.3 | 1.9 |

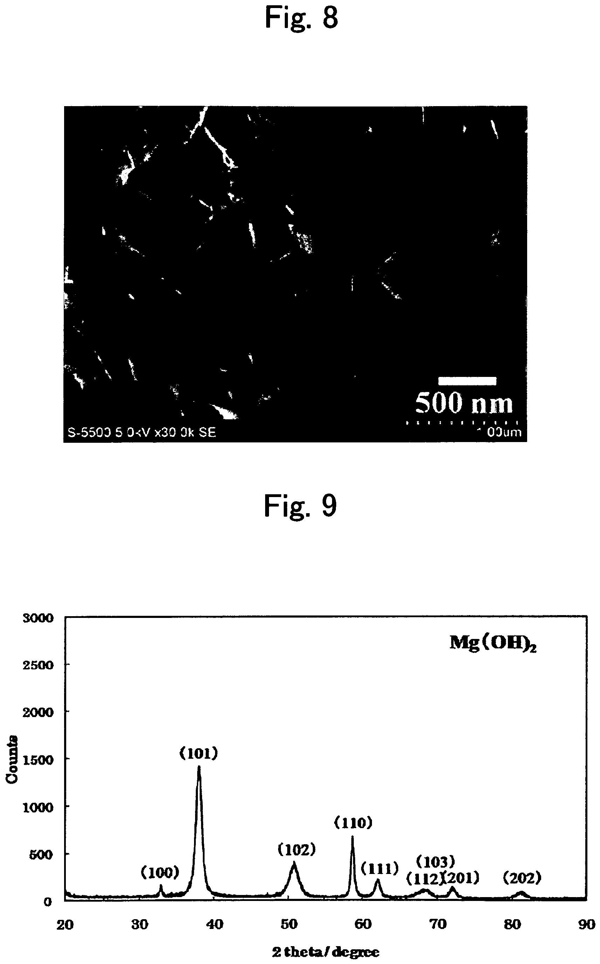

The particle morphology before the reaction of the Mg powder 1 and water is, as shown in the upper stage of Fig. 2, "Mg Powder 1", a hexagonal close-packed structure peculiar to Mg. The SEM photograph of the powder after reaction with water is shown in Fig. 8; and the XRD diffraction pattern of the powder after reaction with water is shown in Fig. 9. From these, it is known that, after reaction with water, Mg changed to magnesium hydroxide Mg(OH)₂. In addition, as shown in the middle stage of Fig. 2, "Mg Powder 2", the particle morphology of the Mg powder 2 before reaction with water is also a hexagonal close-packed structure peculiar to Mg; and from the XRD diffraction pattern thereof, it has been confirmed that the powder after reaction with water changed to magnesium hydroxide Mg(OH)₂, like the Mg powder 1

On the other hand, the aqueous solution after hydrogen generation through the reaction of the Mg powder 1, 2 with water was weakly alkaline. Accordingly, the reaction of Mg powder with water to generate hydrogen is shown by the following formula.

Mg + 2H₂O = Mg(OH)₂ + H₂ (1)

The reaction of the formula (1) rapidly goes on at room temperature, and 1 mol of hydrogen is formed from 1 mol of Mg.

In the case of the reaction of the formula (1), the reaction to produce Mg(OH)₂ from Mg is exothermic reaction from the thermochemical data thereof. However, in reaction of Mg with water, Mg was put into a sufficient amount of water in this Example, and therefore the water temperature did not rise. When the water temperature rises, it is expected that the reaction speed may increase. Accordingly, the generation of hydrogen gas in different cases where 100 mg of the Mg powder 2 was put into water (100 ml) kept at 25, 40, 60 or 70°C was plotted relative to time (second), and shown in Fig. 10. From this drawing, it is known that the hydrogen gas generation increases along with temperature elevation.

### (Example 3 - Comparative)

Method for measurement from pressure change in constant volume.

In the above-mentioned Example, the amount of hydrogen generation in the cases where Mg powder was put into a sufficient amount of water was determined with time. Contrary to this, when the quantitative ratio of Mg powder to water is changed, in particular, when the reaction of a small amount of water with Mg is taken into consideration, the hydrogen generation is accompanied by exothermic reaction, and therefore, naturally, it is considered that the temperature of the sample (Mg) may rise and the reaction of Mg with water may be promoted to thereby increase the hydrogen generation speed. Accordingly, an apparatus with a reactor connected to a pressure gauge, as shown in Fig. 11, was constructed. The apparatus is so designed that a sample of Mg nanoparticles is previously set in the reactor and a given amount of water is dropwise applied to the sample from the water reservoir connected to the reactor via an injector.

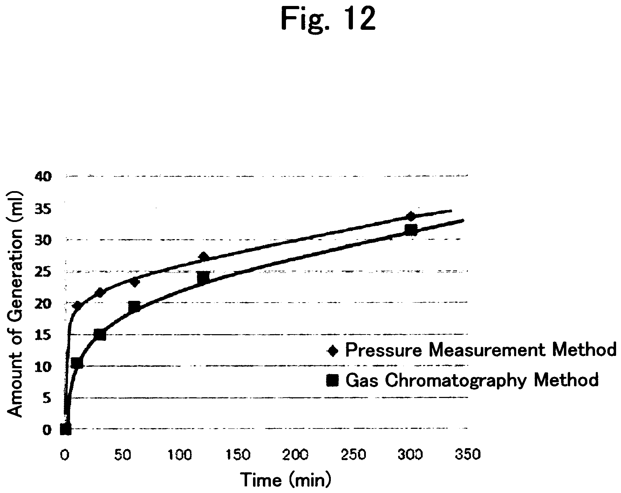

Mg powder 1 (100 mg) was put into the reactor in Fig. 11, and the relationship between the amount of hydrogen generation when 2.8 ml of water (distilled water) was dropwise applied thereto, and time is shown in Fig. 12 and in Table 3 (pressure measurement method).

From Fig. 12 and Table 3, the amount of hydrogen generation in 10 minutes after the dropwise addition of water is 19.5 ml. On the other hand, the amount of generation from a large quantity of water (gas chromatography) is 10.5 ml. The comparison between the two shows that, in the initial stage of reaction, the hydrogen generation speed is higher in the pressure measurement method shown in Fig. 11 (in which 2.8 ml of distilled water was dropwise applied to 100 mg of the Mg powder sample). It is considered that the reason may be because of the influence of the exothermic reaction.

**[Table 3]**

| Data in Different Hydrogen Generation Measurement Methods | | |
|---|---|---|
| Time | Pressure Measurement Method | Gas Chromatography Method |
| 0 min | 0.0 ml | 0.0 ml |
| 10 min | 19.5 ml | 10.5 ml |
| 30 min | 21.6 ml | 14.9 ml |
| 60 min | 23.3 ml | 19.4 ml |
| 120 min | 27.3 ml | 24.0 ml |
| 300 min | 33.6 ml | 31.5 ml |
| Pressure Measurement Method: Method of measuring the amount of generation from pressure change caused by hydrogen generation in closed container. | | |
| Gas Chromatography Method: Method of measurement from hydrogen concentration change in closed container. | | |

Summarizing the above results, the particle size range of the hydrogen generating material is preferably 50 nm or more but 1000 nm (1 µm) or less. The reason is shown below.
Reason 1: Assuming that the thickness of the reaction layer is the same irrespective of the size of Mg metal particles, the amount of hydrogen generation is larger when the particle size is smaller. For example, when particles having a particle size of 250 nm are compared with particles having a particles of 20000 nm (20 µm) and when it is assumed that the particles have reacted to the depth of 10 nm from the particle surface, the computed amount of hydrogen to be generated is 204 ml/g and 2.7 ml/g, respectively. In that manner, the difference in particle size has a great influence on the amount of hydrogen generation (for the same period of time), and therefore, the uppermost limit of the particle size is 1 µm or so. Regarding the lowermost limit of the particle size, the fact that the particles have an oxide layer formed through stabilization treatment and the thickness of the layer is from 5 to 10 nm or so, must be taken into consideration. In the particles having a particle size of 10 nm, the oxide layer not reacting with water accounts for the majority of each particle. Accordingly, the lowermost limit of the particle size is 50 nm.
Reason 2: Mg particles can be produced extremely efficiently through arc discharge in a mixed atmosphere of hydrogen or nitrogen and argon as used in the present application, and the produced Mg particles are mixed particles having a particle size range of at most 1000 nm (more than 3 m²/g) but at least 50 nm (less than 70 m²/g).

A more preferred particle size range of the hydrogen generating material is, in terms of the specific surface area thereof, from 4 m²/g to 50 m²/g.

However, in an atmosphere not containing oxygen, the range is not limited as above but may cover even the minimum unit of particle constitution.

### (Example 4 - Comparative)

The same experiment as in Example 2 was carried out except that Mg pellets produced through compression molding were used in place of the Mg powder therein. The contact with water was bettered, and hydrogen was generated efficiently from the pellets.

When compression-molded pellets produced from a from a mixture of a metal powder having a larger specific gravity than Mg and an Mg powder were used for reaction with water, the Mg particles buried in the pellets did not disperse in water but intensively reacted with water, and hydrogen was efficiently generated from the pellets.

It has been found that, depending on the combination of Mg powder and the other metal powder, the manner of hydrogen generation differs.

As the additive metal powder in the Mg powder 2 and the Mg powder 3, three types of metals, Ag (silver), Cu (copper) and Fe (iron) were selected, and pellets of six types of combination in all were produced and tested for the manner of hydrogen generation through reaction with water.

Table 4 shows the relationship between the amount of hydrogen generation and the parameters of the mixed powder material, the particle size of Mg powder, the proportion of Mg and time.

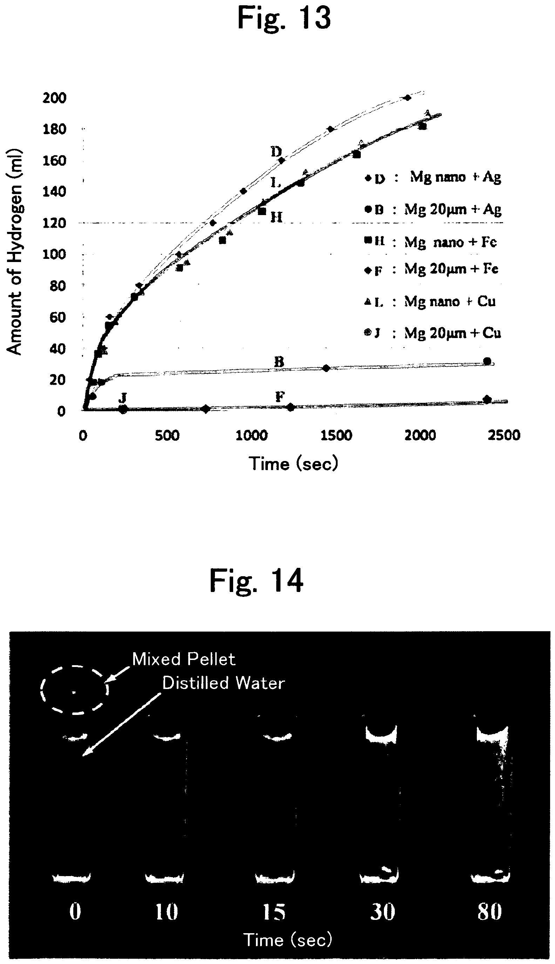

Fig. 13 shows the time-dependent change of the amount of hydrogen generation from the Mg particles mixed with Ag, Cu or Fe.

From the above results, the amount of hydrogen generation varying with time can be roughly divided into two groups. The group in which the amount of hydrogen generation is larger includes Mg nanoparticles-containing metal powders; and the group in which the amount of hydrogen generation is smaller includes Mg fine powder (20 µm). In both groups, the amount of hydrogen generation is the largest in the combination with the other metal, Ag, and becomes smaller in the combination with Fe and Cu in that order.

Though not clear, it may be estimated that the reason would be because of the electrochemical behavior of a type of local cells constituted between the Mg powder and the mixed metal powder. Accordingly, not limited to Ag, Fe and Cu, it is believed that any other metal having a larger standard electrode potential in the positive direction than Mg could have the effect of promoting hydrogen generation.

**[Table 4]**

| Case No. | Particle Size of Mg Particles (µm) | Additive Metal Particles | | | Mg Weight (mg) | Amount of Hydrogen Generation (ml/g) (as 1 g of Mg particles) | | |
|---|---|---|---|---|---|---|---|---|
| | | Material | Particle Size (µm) | Weight (mg) | | | | |
| | | | | | | 10 min | 20 min | 30 min |
| 4-1 | 0.265 | Ag | 1 | 45 | 5 | 110 | 160 | 195 |
| 4-2 | 20 | Aq | 1 | 45 | 5 | 21 | 23 | 26 |
| 4-3 | 0.265 | Fe | 150 | 45 | 5 | 90 | 125 | 165 |
| 4-4 | 20 | Fe | 150 | 45 | 5 | 2 | 3 | 4 |
| 4-5 | 0.265 | Cu | 15 | 45 | 5 | 100 | 136 | 170 |
| 4-6 | 20 | Cu | 15 | 45 | 5 | - | - | - |
| Note: The amount of hydrogen generation in 4-6 was too small to measure. | | | | | | | | |

### (Example 5 - Comparative)

Example 4 shows that the combination of Mg and Ag can generate hydrogen most readily.

In case where Mg nanoparticles can be carried anywhere safely and in a simplified manner, as in this embodiment hydrogen may be taken out in any place where water is available, whenever needed. The blend ratio of Mg nanoparticles and Ag is not limited but may be any desired one; however, the shaped pellets of the mixed powder must not be broken easily.

As one example, Fig. 14 shows video grab images of hydrogen generation in a case where a shaped body (diameter 3 mm) of 45 mg of Ag and 5 mg of Mg was put into a glass cell filled with 10 ml of water therein.

Even when the amount of Mg nanoparticles was small, hydrogen contained water was produced extremely easily within a short period of time of 10 minutes.

Green pellets of metal (Ag, Fe, Cu) with Mg nanoparticles buried therein are portable, and by putting them in an aqueous solution for drinking (aqueous solution such as drinkable water, juice, alcoholic beverage, etc.), hydrogen contained water can be produced.

The mixture shaped body from which hydrogen generation was finished is porous, and a case of Ag-based noble metal is usable as accessories.

The shaped body containing Mg nanoparticles therein is a type of canned hydrogen and is portable, from which hydrogen gas can be readily obtained in any place where one has moved so far as water is available in the place, and fuel cells can be driven accordingly. Water from which hydrogen was generated can be used as reduced hydrogen water.

### (Example 6)

A control technique for hydrogen generation using nanoparticles such as the above-mentioned Mg powder 1 and Mg powder 2 is described below with reference to Fig. 15 and Fig. 16.

Mg particles such as the above-mentioned Mg powder 1 and Mg powder 2 in the invention is cotton-like or lampblack-like ones in the initial stage of their production, and did not readily drop down owing to their own weight. The particles just after their production may be compression-molded into a molded body having any desired shape with self-shape-retainability, and in addition, the shaped body could have a porosity of around 40% or so; however, under the pressure in ordinary compression molding, the porosity could not be reduced to at most 10%.

Since the porosity is enough for water penetration through the pores, and therefore, when water is applied to the compression-molded body, the body may rapidly absorb water to generate hydrogen.

Based on this finding, in the apparatus shown in Fig. 15, a granular or pellet-like material produced by compression-molding the particles (P) so as to have a volume enough for the minimum unit of the necessary amount of hydrogen generation (this may vary depending on the use of the generated hydrogen and on the apparatus driving environment) is referred to as a hydrogen generating agent of the first case.

When the Mg particles just after their production were dispersed in an anhydrous alcohol, they were inactive to the medium, but the state thereof could be controlled to be from liquid to solid depending on the concentration thereof. Further, when water was added to the dispersion, water was rapidly absorbed by the dispersion to generate hydrogen.

The liquid, semi-solid or solid dispersion prepared by using such property thereof is referred to as a hydrogen generating agent of the second case.

The control valve (Ta) in Fig. 15 is a generic term of conventional known valves in accordance with the above-mentioned property of the two cases.

Concretely, in case where the compression-molded particles, a type of hydrogen generating agent of the first case, or a low-viscosity liquid, a type of hydrogen generating agent of the second case is used, the control valve (Ta) is suitably an on-off valve capable of controlling the amount of the hydrogen generating agent that drops down owing to its own weight.

For the high-viscosity liquid, semisolid or solid material, a type of hydrogen generating agent of the second case, the control valve (Ta) is suitably a unit having the function of forcedly feeding out the hydrogen generating agent of the type, such as a screw feeder.

As in the above, the necessary amount of hydrogen can be suitably generated.

In case where the compression-molded boy, a type of hydrogen generating agent of the first case is used, or the solid dispersion, a type of hydrogen generating agent of the second case is used, the generating bed (PB) to be used in Fig. 16 may be prepared by previously shaping the hydrogen generating agent into a shaped body having a form that may be suitable to the site where the hydrogen generating agent is set inside the closed container (C).

In case where a hydrogen generating agent processed to have flowability, such as the granular material, a type of hydrogen generating agent of the first case, or the granular material prepared from the solid dispersion, a type of hydrogen generating agent of the second case, or the liquid or semisolid material, a type of hydrogen generating agent of the second case, is used, the agent may be fed into the closed container (C) to form the generating bed (PB).

In any embodiment of Fig. 15 or Fig. 16, the used Mg particles must be taken out from the closed container (C), and therefore an openable and closable mouth (not shown) via which the particles can be taken out is provided depending on the embodiment.

Use of the particles (P) or the flowable generating bed (PB) may be attained by using a drain duct. In the case where the hydrogen generating agent is shaped into a shaped body having a form that may be suitable to the site where the hydrogen generating agent is set inside the closed container (C), it is desirable that the container (C) is so designed as to be openable by dividing it into upper and lower parts, and the shaped body can be taken out not being broken, from the viewpoint of facilitating the taking out operation in a simplified manner.

The latter configuration can also be used even in such a case where the property of the particles (P) may change owing to the hydrogen generation reaction and may lose the original flowability thereof.

All generated hydrogen may not be necessarily used, and therefore, in order that the hydrogen accumulated in the closed container (C) may not have an excessive high pressure, it is effective in practical use to additionally arrange a safety mechanism for gradually discharging the hydrogen outside the container for combustion in case where hydrogen exceeding a predetermined pressure is accumulated.

The hydrogen discharge duct (B) may be so designed as to be equipped with a unidirectional vale (not shown) that may open only when the pressure inside the closed container (C) is over the external pressure or an on-off valve equipped with a pressure sensor in order that external air could not flow into the closed container (C) and that any unforeseen hydrogen-oxygen reaction could not occur inside the closed container (C); and the configuration of the type may be useful in practical use.

The closed container (C) having the above-mentioned open-type mouth requires an operation of oxygen removal every time after release.

The reference numerals and signs in the drawings are as follows:
- 1,1': Reaction Gas Inlet
- 2: Electrode (-)
- 3: Arc Plasma
- 4: Mg Ingot (starting material)
- 5: Water-Cooled Hearth
- 6: Reaction Chamber
- 7: Filter
- 8: Circulation Pump
- 9: Globe Box
- 10: Rotary Pump
- 14: Water Tank
- 14a: Control Valve
- B: Hydrogen Discharge Duct
- C: Closed Container
- P: Particle
- PB: Generating Bed
- T: Storing Tank
- Ta: Control Valve
- W: Water

## Claims

1. A hydrogen generating material comprising a dispersion of Mg nanoparticles in a liquid, wherein said Mg nanoparticles have a surface which been slowly oxidized in an atmosphere having a lower oxygen concentration than the oxygen concentration in air, wherein the liquid is an anhydrous alcohol, said Mg nanoparticles being capable of reacting with water to generate hydrogen.

2. The hydrogen generating material as claimed in claim 1, wherein the specific surface area of the Mg nanoparticles is less than 70 m²/g but more than 3 m²/g.

3. The hydrogen generating material as claimed in claim 1 or claim 2, containing a powder of a metal of which the standard electrode potential is larger in the positive direction than that of Mg.

4. The hydrogen generating material as claimed in claim 3, wherein the metal of which the standard electrode potential is larger in the positive direction than that of Mg is at least one metal selected from Ag, Cu and Fe.

5. A method for producing the hydrogen generating material of any of claims 1 to claim 4, which comprises at least the following steps (a) to (c):
(a) a step of arc-melting an Mg metal ingot in an atmosphere of hydrogen, nitrogen, Ar or a mixed gas thereof to give Mg nanoparticles;
(b) a step of slowly oxidizing the surface of the Mg nanoparticles in an atmosphere having a lower oxygen concentration than the oxygen concentration in air;
(c) a step of dispersing the Mg nanoparticles in an anhydrous alcohol.

6. A method for producing hydrogen by reacting the hydrogen generating material of any of claim 1 to claim 4, with water to generate hydrogen.

7. The method for producing hydrogen as claimed in claim 6, wherein the hydrogen generating material is put into to water.

8. The method for producing hydrogen as claimed in claim 6, wherein water is added dropwise to the hydrogen generating material for the reaction.

## Patentansprüche

1. Wasserstofferzeugendes Material, das eine Dispersion von Mg-Nanopartikeln in einer Flüssigkeit umfasst, wobei die Mg-Nanopartikel eine Oberfläche aufweisen, die in einer Atmosphäre mit einer niedrigeren Sauerstoffkonzentration als der Sauerstoffkonzentration in Luft langsam oxidiert wurde, wobei die Flüssigkeit ein wasserfreier Alkohol ist, wobei die Mg-Nanopartikel mit Wasser reagieren können, um Wasserstoff zu erzeugen.

2. Wasserstofferzeugendes Material wie in Anspruch 1 beansprucht, wobei die spezifische Oberfläche der Mg-Nanopartikel weniger als 70 m²/g, aber mehr als 3 m²/g beträgt.

3. Wasserstofferzeugendes Material wie in Anspruch 1 oder Anspruch 2 beansprucht, das ein Pulver eines Metalls enthält, dessen Standardelektrodenpotential in der positiven Richtung größer ist als das von Mg.

4. Wasserstofferzeugendes Material wie in Anspruch 3 beansprucht, wobei das Metall, dessen Standardelektrodenpotential in der positiven Richtung größer ist als das von Mg, mindestens ein Metall ist, das aus Ag, Cu und Fe ausgewählt ist.

5. Verfahren zur Herstellung des wasserstofferzeugenden Materials nach einem der Ansprüche 1 bis 4, das mindestens die folgenden Schritte (a) bis (c) umfasst:
(a) einen Schritt des Lichtbogenschmelzens eines Mg-Metallbarrens in einer Atmosphäre von Wasserstoff, Stickstoff, Ar oder einem Mischgas davon, um Mg-Nanopartikel zu ergeben;
(b) einen Schritt des langsamen Oxidierens der Oberfläche der Mg-Nanopartikel in einer Atmosphäre mit einer niedrigeren Sauerstoffkonzentration als der Sauerstoffkonzentration in Luft;
(c) einen Schritt des Dispergierens der Mg-Nanopartikel in einem wasserfreien Alkohol.

6. Verfahren zur Herstellung von Wasserstoff durch Umsetzen des wasserstofferzeugenden Materials nach einem der Ansprüche 1 bis 4 mit Wasser, um Wasserstoff zu erzeugen.

7. Verfahren zur Herstellung von Wasserstoff wie in Anspruch 6 beansprucht, wobei das wasserstofferzeugende Material in Wasser gegeben wird.

8. Verfahren zur Herstellung von Wasserstoff wie in Anspruch 6 beansprucht, wobei Wasser dem wasserstofferzeugenden Material für die Reaktion tropfenweise zugegeben wird.

## Revendications

1. Matériau générateur d'hydrogène comprenant une dispersion de nanoparticules de Mg dans un liquide, dans lequel lesdites nanoparticules de Mg ont une surface qui a été lentement oxydée dans une atmosphère ayant une concentration d'oxygène inférieure à la concentration d'oxygène dans l'air, où le liquide est un alcool anhydre, lesdites nanoparticules de Mg étant capables de réagir avec l'eau pour générer de l'hydrogène.

2. Matériau générateur d'hydrogène selon la revendication 1, dans lequel la surface spécifique des nanoparticules de Mg est inférieure à 70 m²/g mais supérieure à 3 m²/g.

3. Matériau générateur d'hydrogène selon la revendication 1 ou la revendication 2, contenant une poudre d'un métal dont le potentiel d'électrode standard est plus grand dans le sens positif que celui de Mg.

4. Matériau générateur d'hydrogène selon la revendication 3, dans lequel le métal dont le potentiel d'électrode standard est plus grand dans le sens positif que celui de Mg est au moins un métal choisi parmi Ag, Cu et Fe.

5. Procédé de fabrication du matériau générateur d'hydrogène selon l'une quelconque des revendications 1 à 4, comprenant au moins les étapes (a) à (c) suivantes :
(a) une étape de fusion à l'arc d'un lingot de métal Mg dans une atmosphère d'hydrogène, d'azote, d'Ar ou d'un gaz mixte de ceux-ci pour donner des nanoparticules de Mg ;
(b) une étape d'oxydation lente de la surface des nanoparticules de Mg dans une atmosphère ayant une concentration d'oxygène inférieure à la concentration d'oxygène dans l'air ;
(c) une étape de dispersion des nanoparticules de Mg dans un alcool anhydre.

6. Procédé de fabrication d'hydrogène en faisant réagir le matériau générateur d'hydrogène selon l'une quelconque des revendications 1 à 4, avec de l'eau pour générer de l'hydrogène.

7. Procédé de fabrication d'hydrogène selon la revendication 6, dans lequel le matériau générateur d'hydrogène est mis dans de l'eau.

8. Procédé de fabrication d'hydrogène selon la revendication 6, dans lequel de l'eau est ajoutée goutte-à-goutte au matériau générateur d'hydrogène pour la réaction.
